# EUROPÄISCHE PATENTANMELDUNG

(11) **EP 1 482 629 A1**
(43) Veröffentlichungstag der Anmeldung: **01.12.2004**
(21) Anmeldenummer: 03405372.8
(22) Anmeldetag: 26.05.2003
(51) Int. Cl.: H02M 7/48, H02M 5/297

(54) **Umrichterschaltung**

(71) Anmelder: ABB Schweiz AG, 5400 Baden (CH)
(72) Erfinder: Steimer, Peter, 5424 Unterehrendingen (CH)
(74) Vertreter: ABB Patent Attorneys

(57) **Zusammenfassung**

Es wird eine Umrichterschaltung für mindestens eine Phase (R, S, T) angegeben, die ein für jede Phase (R, S, T) vorgesehenes erstes Schaltgruppensystem (1) umfasst, welches eine durch einen ansteuerbaren Leistungshalbleiterschalter (2) und durch einen mit dem ansteuerbaren Leistungshalbleiterschalter (2) verbundenen Kondensator (3) gebildete erste Hauptschaltgruppe (4) aufweist, und welches mindestens eine durch zwei in Serie geschaltete ansteuerbare Leistungshalbleiterschalter (5) und durch einen mit einem der Leistungshalbleiterschalter (5) verbundenen Kondensator (6) gebildete Zwischenschaltgruppe (7) aufweist, wobei die Zwischenschaltgruppe (7) parallel zur ersten Hauptschaltgruppe (4) geschaltet ist. Weiterhin weist das erste Schaltgruppensystem (1) eine durch einen ansteuerbaren Leistungshalbleiterschalter (8) gebildete zweite Hauptschaltgruppe (9) auf, wobei die zweite Hauptschaltgruppe (9) parallel zur mindestens einen Zwischenschaltgruppe (7) und zur ersten Hauptschaltgruppe (4) geschaltet ist. Der ansteuerbare Leistungshalbleiterschalter (2) der ersten Hauptschaltgruppe (4) sowie der ansteuerbare Leistungshalbleiterschalter (8) der zweiten Hauptschaltgruppe (9) ist als Abschaltthyristor ausgebildet.

## Beschreibung

### Technisches Gebiet

Die Erfindung bezieht sich auf das Gebiet der Leistungselektronik. Sie geht aus von einer Umrichterschaltung gemäss dem Oberbegriff des unabhängigen Anspruchs.

### Stand der Technik

Umrichterschaltungen werden heute in einer Fülle von leistungselektronischen Anwendungen eingesetzt. Die Anforderungen an eine solche Umrichterschaltung sind dabei zum einen, möglichst wenig Oberschwingungen an Phasen eines an die Umrichterschaltung gängigerweise angeschlossenen elektrischen Wechselspannungsnetzes zu erzeugen und zum anderen mit einer möglichst geringen Anzahl an elektrischen Bauelementen möglichst grosse Leistungen zu übertragen. Eine geeignete Umrichterschaltung ist in der WO 01/93412 A2 angegeben. Darin ist ein erstes Schaltgruppensystem für jede Phase vorgesehen, welches eine durch einen ansteuerbaren Leistungshalbleiterschalter und durch einen mit dem ansteuerbaren Leistungshalbleiterschalter verbundenen Kondensator gebildete erste Hauptschaltgruppe aufweist. Der ansteuerbare Leistungshalbleiterschalter der ersten Hauptschaltgruppe ist als Bipolartransistor mit isoliert angeordneter Ansteuerelektrode (IGBT - Insulated Gate Bipolartransistor) ausgebildet. Weiterhin weist das erste Schaltgruppensystem mindestens eine durch zwei in Serie geschaltete ansteuerbare Leistungshalbleiterschalter und eine durch einen mit einem der Leistungshalbleiterschalter verbundenen Kondensator gebildete Zwischenschaltgruppe auf, wobei die Zwischenschaltgruppe parallel zur ersten Hauptschaltgruppe geschaltet ist. Die ansteuerbaren Leistungshalbleiterschalter der Zwischenschaltgruppe sind ebenfalls als Bipolartransistoren mit isoliert angeordneten Ansteuerelektroden ausgeführt. Ferner umfasst das erste Schaltgruppensystem eine durch einen ansteuerbaren Leistungshalbleiterschalter gebildete zweite Hauptschaltgruppe, wobei die zweite Hauptschaltgruppe parallel zur mindestens einen Zwischenschaltgruppe und zur ersten Hauptschaltgruppe geschaltet ist. Der ansteuerbare Leistungshalbleiterschalter der zweiten Hauptschaltgruppe ist auch als Bipolartransistor mit isoliert angeordneter Ansteuerelektrode ausgebildet.

Problematisch bei einer Umrichterschaltung nach der WO 01/93412 A2 ist, dass im statischen Zustand der Umrichterschaltung die Gleichspannung am Kondensator der ersten Hauptschaltgruppe und die Gleichspannung am Kondensator der zweiten Hauptschaltgruppe jeweils von dem zugehörigen Bipolartransistor mit isoliert angeordneter Ansteuerelektrode gesperrt werden muss, wobei die eingesetzten Bipolartransistoren mit isoliert angeordneten Ansteuerelektroden gängigerweise eine Sperrspannung in der Grössenordnung von 3.3kV aufweisen. Soll aber eine geforderte grosse Leistung übertragen werden, sind Elemente mit einer höheren Sperrspannung notwendig. Eine Gleichspannung in der vorstehend genannten Grössenordnung im statischen Zustand der Umrichterschaltung zu sperren ist, mit einem einzigen gängigen Bipolartransistor mit isoliert angeordneter Ansteuerelektrode nicht möglich. In der WO 01/93412 A2 ist deshalb für diesen Fall jeweils ein weiterer Bipolartransistor mit isoliert angeordneter Ansteuerelektrode für die erste Hauptgruppe und für die zweite Hauptgruppe vorgesehen, wobei der jeweilige zusätzliche Bipolartransistor mit isoliert angeordneter Ansteuerelektrode in Serie zum bereits vorgesehenen Bipolartransistor mit isoliert angeordneter Ansteuerelektrode geschaltet ist. Jedoch erhöht sich die Bauelementanzahl durch diese Massnahme stark, woraus ein enormer Platzbedarf und hohe Kosten resultieren. Mit der steigenden Bauelementanzahl steigt auch die Anzahl der üblicherweise für die Bipolartransistoren mit isoliert angeordneten Ansteuerelektroden vorgesehenen Ansteuerschaltungen und der damit einhergehende Verkabelungsaufwand, wodurch weiterer Platzbedarf notwendig ist und die Kosten weiter ansteigen. Zudem ergibt sich aus der Mehrzahl an elektronischen Bauelementen und aus der Bedingung, dass die beiden Bipolartransistoren mit isoliert angeordneten Ansteuerelektroden der ersten Hauptschaltgruppe und der zweiten Hauptschaltgruppe jeweils nahezu gleichzeitig Schalten müssen, eine erhöhte Störanfälligkeit, so dass die Verfügbarkeit der Umrichterschaltung insgesamt sinkt.

### Darstellung der Erfindung

Aufgabe der Erfindung ist es deshalb, eine Umrichterschaltung für mindestens eine Phase anzugeben, die grosse Leistungen übertragen kann, dabei mit möglichst wenigen Bauelementen auskommt und zusätzlich unkompliziert und wenig störungsanfällig ist. Diese Aufgabe wird durch die Merkmale des Anspruchs 1 gelöst. In den abhängigen Ansprüchen sind vorteilhafte Weiterbildungen der Erfindung angegeben.

Die erfindungsgemässe Umrichterschaltung für mindestens eine Phase umfasst ein für jede Phase vorgesehenes erstes Schaltgruppensystem, welches eine durch einen ansteuerbaren Leistungshalbleiterschalter und eine durch einen mit dem ansteuerbaren Leistungshalbleiterschalter verbundenen Kondensator gebildete erste Hauptschaltgruppe aufweist. Zudem weist das erste Schaltgruppensystem mindestens eine durch zwei in Serie geschaltete ansteuerbare Leistungshalbleiterschalter und durch einen mit einem der Leistungshalbleiterschalter verbundenen Kondensator gebildete Zwischenschaltgruppe auf, wobei die Zwischenschaltgruppe parallel zur ersten Hauptschaltgruppe geschaltet ist. Ferner weist das erste Schaltgruppensystem eine durch einen ansteuerbaren Leistungshalbleiterschalter gebildete zweite Hauptschaltgruppe auf, wobei die zweite Hauptschaltgruppe parallel zur mindestens einen Zwischenschaltgruppe und zur ersten Hauptschaltgruppe geschaltet ist. Erfindungsgemäss ist der ansteuerbare Leistungshalbleiterschalter der ersten Hauptschaltgruppe als Abschaltthyristor und der ansteuerbare Leistungshalbleiterschalter der zweiten Hauptschaltgruppe als Abschaltthyristor ausgebildet. Durch den Einsatz eines Abschaltthyristors jeweils in der ersten und zweiten Hauptschaltgruppe kann am Kondensator der ersten Hauptschaltgruppe und am Kondensator der zweiten Hauptschaltgruppe jeweils eine grosse Gleichspannung angelegt werden. Diese hohe Gleichspannung kann von den Abschaltthyristoren problemlos geschaltet und somit auch gesperrt werden. Durch die vorstehend erwähnte grosse Gleichspannung lässt sich vorteilhaft eine grosse Leistung durch die erfindungsgemässe Umrichterschaltung übertragen, ohne dass sich dann, wie aus dem Stand der Technik bekannt, der Bauelementeaufwand drastisch erhöht. Durch die geringe Anzahl an Bauelementen ist die erfindungsgemässe Umrichterschaltung zudem sehr einfach und kostengünstig zu realisieren und zu betreiben, benötigt wenig Platz und zeichnet sich durch eine geringe Störanfälligkeit und damit durch eine hohe Verfügbarkeit aus.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine erste Ausführungsform einer erfindungsgemässen Umrichterschaltung,
- Fig. 2: eine zweite Ausführungsform der erfindungsgemässen Umrichterschaltung,
- Fig. 3: eine dritte Ausführungsform der erfindungsgemässen Umrichterschaltung,
- Fig. 4: eine vierte Ausführungsform der erfindungsgemässen Umrichterschaltung,
- Fig. 5: eine fünfte Ausführungsform der erfindungsgemässen Umrichterschaltung,
- Fig. 6: eine sechste Ausführungsform der erfindungsgemässen Umrichterschaltung,
- Fig. 7: eine siebte Ausführungsform der erfindungsgemässen Umrichterschaltung,
- Fig. 8: eine achte Ausführungsform der erfindungsgemässen Umrichterschaltung und
- Fig. 9: eine neunte Ausführungsform der erfindungsgemässen Umrichterschaltung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

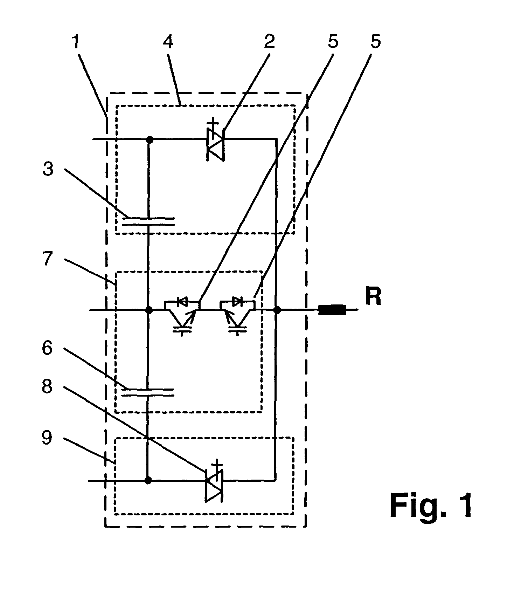

In Fig. 1 ist eine, insbesondere einphasige, erste Ausführungsform einer erfindungsgemässen Umrichterschaltung gezeigt. Darin weist die Umrichterschaltung für mindestens eine Phase R, S, T ein für jede Phase R, S, T vorgesehenes erstes Schaltgruppensystem 1 auf, welches eine durch einen ansteuerbaren Leistungshalbleiterschalter 2 und durch einen mit dem ansteuerbaren Leistungshalbleiterschalter 2 verbundenen Kondensator 3 gebildete erste Hauptschaltgruppe 4 aufweist. Ferner weist das erste Schaltgruppensystem 1 mindestens eine durch zwei in Serie geschaltete ansteuerbare Leistungshalbleiterschalter 5 und durch einen mit einem der Leistungshalbleiterschalter 5 verbundenen Kondensator 6 gebildete Zwischenschaltgruppe 7 auf. Die Zwischenschaltgruppe 7 ist gemäss Fig. 1 parallel zur ersten Hauptschaltgruppe 4 geschaltet. Die zwei in Serie geschalteten ansteuerbaren Leistungshalbleiterschalter 5 der Zwischenschaltgruppe 7 sind gemäss Fig. 1 jeweils als Bipolartransistoren mit isoliert angeordneten Ansteuerelektroden und antiparallel geschalteter Diode ausgeführt. Darüber hinaus weist das erste Schaltgruppensystem 1 eine durch einen ansteuerbaren Leistungshalbleiterschalter 8 gebildete zweite Hauptschaltgruppe 9 auf, wobei die zweite Hauptschaltgruppe 9 parallel zur mindestens einen Zwischenschaltgruppe 7 und zur ersten Hauptschaltgruppe 4 geschaltet ist. Nach der Erfindung ist der ansteuerbare Leistungshalbleiterschalter 2 der ersten Hauptschaltgruppe 4 als Abschaltthyristor und der ansteuerbare Leistungshalbleiterschalter 8 der zweiten Hauptschaltgruppe 9 als Abschaltthyristor ausgebildet. Mittels eines Abschaltthyristor jeweils in der ersten und zweiten Hauptschaltgruppe 4, 9 kann am Kondensator 3 der ersten Hauptschaltgruppe 4 und am Kondensator 6 der zweiten Hauptschaltgruppe jeweils eine grosse Gleichspannung, insbesondere wesentlich höher als 3.3kV, angelegt werden, welche von den Abschaltthyristoren problemlos geschaltet und somit auch gesperrt werden kann. Mittels der vorstehend erwähnten grossen Gleichspannung lässt sich vorteilhaft eine grosse Leistung durch die erfindungsgemässe Umrichterschaltung übertragen, wobei der Bauelementeaufwand gering gehalten werden kann. Durch die geringe Anzahl an Bauelementen ist die erfindungsgemässe Umrichterschaltung sehr einfach und kostengünstig zu realisieren und zu betreiben, ist auf nur wenig Platz angewiesen und ist insgesamt wenig störanfällig und erreicht damit eine hohe Verfügbarkeit. Die erfindungsgemässe Umrichterschaltung ist als Gleichrichter, Wechselrichter oder als Phasenschieber beispielsweise zur Kompensation von Blindleistung betreibbar beziehungsweise einsetzbar und ist somit äusserst variabel verwendbar.

Vorzugsweise ist der Abschaltthyristor gemäss Fig. 1 ein integrierter über die Ansteuerelektrode kommutierter Thyristor (IGCT - Integrated Gate-Commutated Thyristor). Ein solcher Thyristor ist hart angesteuert und weist einen niederinduktiv aufgebauten Ansteuerkreis auf. Weiterhin weist ein solcher Thyristor eine antiparallele Diode auf und hat sich aufgrund seiner hohen Spannungsfestigkeit bei gleichzeitig hoher Schaltfrequenz als besonders vorteilhaft erweisen. Alternativ zu den als Bipolartransistoren mit isoliert angeordneten Ansteuerelektroden ausgeführten ansteuerbaren Leistungshalbleiterschalter 5 der Zwischenschaltgruppe 7 können diese als Abschaltthyristoren ausgebildet sein, wobei sich ebenfalls integrierte über die jeweils zugehörige Ansteuerelektrode kommutierte Thyristoren mit antiparallel geschalteter Diode bewährt haben, die die vorstehend bereits genannten Vorteile aufweisen. Alternativ zu den integrierten über die Ansteuerelektrode kommutierten Thyristoren ist es auch denkbar, Abschaltthyristoren mit seriegeschalteten MOSFET-Transistoren in Kascodeschaltung (ETO - Emitter-Turn-Off Thyristor) zu verwenden.

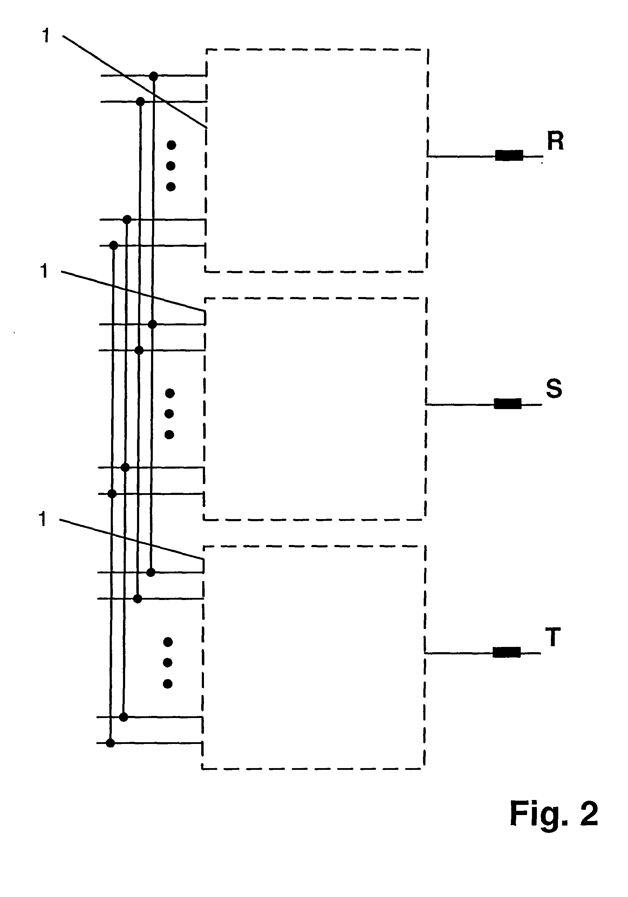

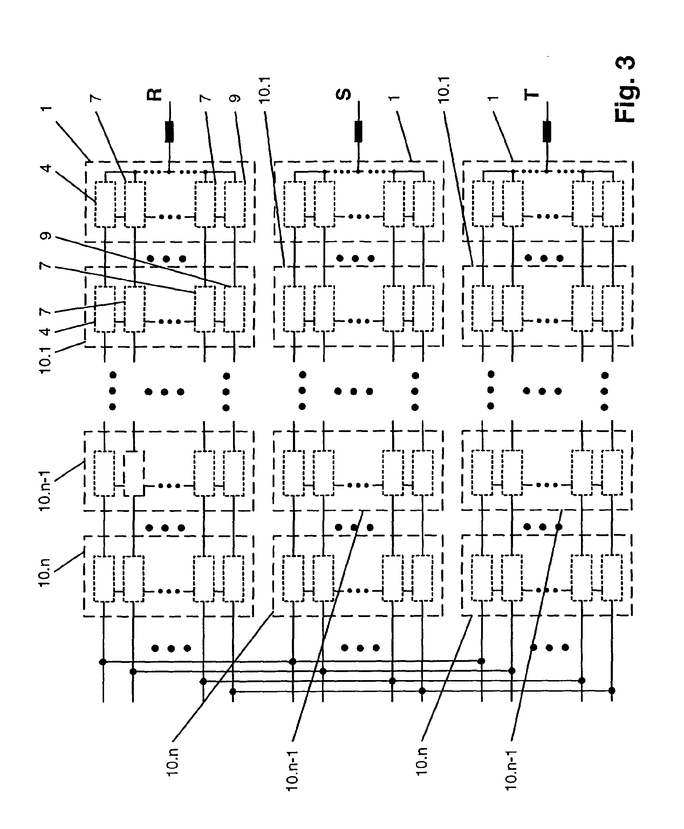

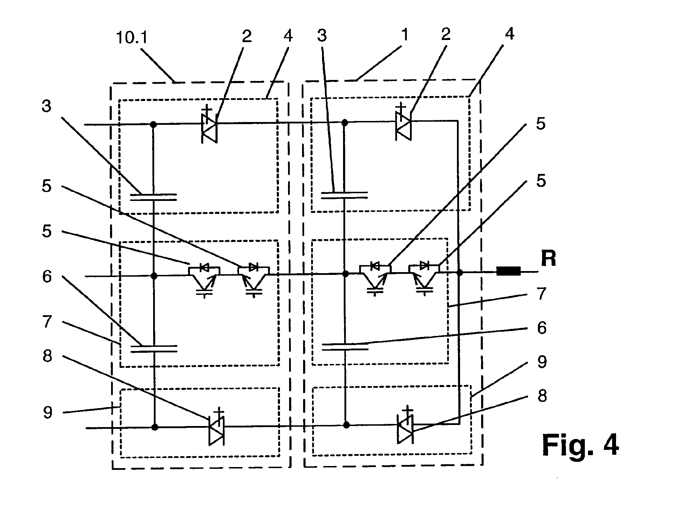

In Fig. 2 ist eine zweite Ausführungsform der erfindungsgemässen Umrichterschaltung gezeigt. Darin sind bei mehreren Phasen R, S, T, insbesondere bei den in Fig. 2 gezeigten drei Phasen R, S, T, die ersten Schaltgruppensysteme 1 der Phasen R, S, T parallel miteinander verbunden, d.h. die Kondensatoren 3 der ersten Hauptschaltgruppen 4 der Schaltgruppensysteme 1 der Phasen R, S, T sind miteinander parallel verbunden und die Kondensatoren 6 der Zwischenschaltgruppen 7 der Schaltgruppensysteme 1 sind miteinander parallel verbunden. In Fig. 3 ist weiterhin eine dritte Ausführungsform der erfindungsgemässen Umrichterschaltung dargestellte, welche eine Verallgemeinerung der Ausführungsform nach Fig. 2 ist. Gemäss Fig. 3 sind für jede Phase R, S, T zum ersten Schaltgruppensystem 1 n weitere Schaltgruppensysteme 10.1,...10.n vorgesehen, wobei n ≥ 1 ist. Beispielhaft ist die dritte Ausführungsform der Umrichterschaltung nach Fig. 3 für drei Phasen gezeigt, wobei aber allgemein eine beliebige Anzahl an Phasen R, S, T denkbar ist. Gemäss Fig. 3 sind ferner die erste Hauptschaltgruppe 4 des ersten Schaltgruppensystems 1 und die ersten Hauptschaltgruppen 4 der n weiteren Schaltgruppensysteme 10.1,...10.n zueinander in Serie geschaltet. Darüber hinaus sind die zweite Hauptschaltgruppe 9 des ersten Schaltgruppensystems 1 und die zweiten Hauptschaltgruppen 9 der n weiteren Schaltgruppensysteme 10.1,...10.n zueinander in Serie geschaltet. Es versteht sich, dass für eine mehrphasige Umrichterschaltung jedes der n weiteren Schaltgruppensysteme 10.1,...10.n entsprechend dem gemäss Fig. 1 vorstehend beschriebenen ersten Schaltgruppensystems 1 ausgebildet ist. In ähnlicher Weise, wie nach Fig. 2, sind bei der dritten Ausführungsform der erfindungsgemässen Umrichterschaltung gemäss Fig. 3 bei mehreren Phasen R, S, T die n-ten weiteren Schaltgruppensysteme 10.n der Phasen R, S, T parallel miteinander verbunden, d.h. die Kondensatoren 3 der ersten Hauptschaltgruppen 4 der n-ten weiteren Schaltgruppensysteme 10.n sind miteinander parallel verbunden und die Kondensatoren 6 der Zwischenschaltgruppen 7 der n-ten weiteren Schaltgruppensysteme 10.n sind miteinander parallel verbunden. Durch die vorgesehenen n weiteren Schaltgruppensysteme 10.1,...10.n für jede Phase R, S, T halbieren sich die Gleichspannungen der Kondensatoren 3, 6 des jeweiligen n-ten Schaltgruppensystems 10.n an den Kondensatoren 3, 6 des nachgeschalteten (n-1)-ten Schaltgruppensystems 10.n-1 im Betrieb der Umrichterschaltung. Bei n=1 weiteren Schaltgruppensystemen 10.1,...10.n, wie dies beispielhaft in einer vierten, insbesondere einphasigen, Ausführungsform der Umrichterschaltung gemäss Fig. 4 gezeigt ist, liegt demnach im Betrieb der Umrichterschaltung am Kondensator 3 der ersten Hauptschaltgruppe 4 des ersten Schaltgruppensystems 1 und am Kondensator 6 der Zwischenschaltgruppe 7 des ersten Schaltgruppensystems 1 jeweils die halbe Gleichspannung des Kondensators 3 der ersten Hauptschaltgruppe 4 des ersten weiteren Schaltgruppensystems 10.1 beziehungsweise des Kondensators 6 der Zwischenschaltgruppe 7 des ersten weiteren Schaltgruppensystems 10.1 an. Durch diese Halbierung der Gleichspannung werden die Leistungshalbleiterschalter 2, 5, 8 und die Kondensatoren 3, 6 des ersten Schaltgruppensystems 1 vorteilhaft entlastet. Allgemein kann dadurch eine Vielzahl an Schaltniveaus generiert werden, wodurch sehr vorteilhaft eine effektive Reduzierung von Oberschwingungen auf der Phasenseite erreicht werden kann.

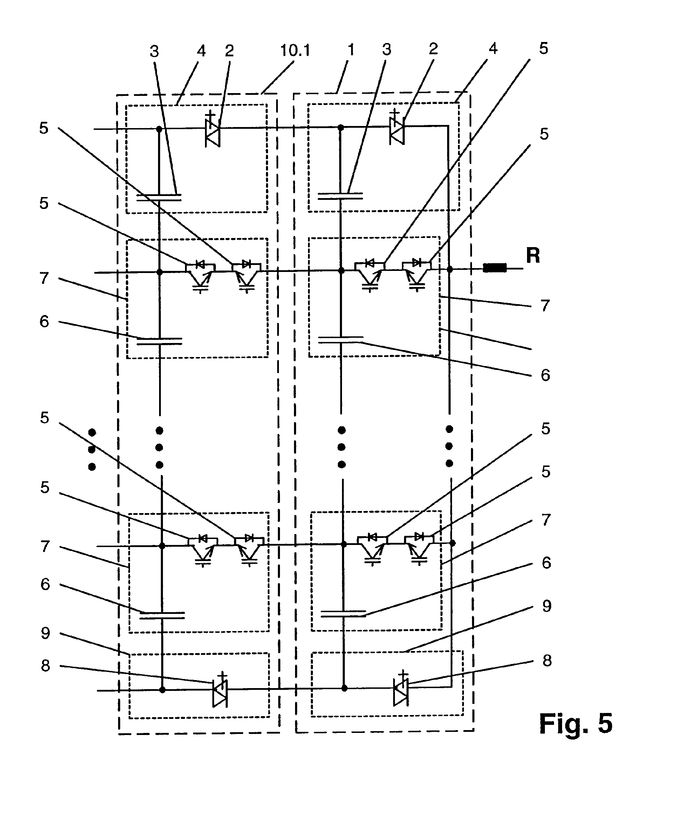

Gemäss Fig. 3 entspricht die Anzahl der Zwischenschaltgruppen 7 eines jeden Schaltgruppensystems 10.1,...10.n der n weiteren Schaltgruppensysteme 10.1,...10.n der Anzahl der Zwischenschaltgruppen 7 des ersten Schaltgruppensystems 1. Weiterhin ist gemäss Fig. 3 und nach einer fünften Ausführungsform der erfindungsgemässen Umrichterschaltung gemäss Fig. 5 jede Zwischenschaltgruppe 7 des ersten weiteren Schaltgruppensystems 10.1 seriell mit jeweils einer Zwischenschaltgruppe 7 des ersten Schaltgruppensystems 1 verbunden. Beispielhaft ist bei der fünften Ausführungsform der erfindungsgemässen Umrichterschaltung gemäss Fig. 5 n=1, wobei die Umrichterschaltung insbesondere einphasig ausgebildet ist. Für n ≥ 2, was der dritten Ausführungsform der Umrichterschaltung gemäss Fig. 3 entspricht, ist jede Zwischenschaltgruppe 7 des n-ten weiteren Schaltgruppensystems 10.2,...10.n seriell mit jeweils einer Zwischenschaltgruppe 7 des (n-1)-ten Schaltgruppensystems 10.2,...10.n verbunden. Der Vorteil, dass allgemein die Anzahl der Zwischenschaltgruppen 7 eines jeden Schaltgruppensystems 10.1,...10.n der n weiteren Schaltgruppensysteme 10.1,...10.n der Anzahl der Zwischenschaltgruppen 7 des ersten Schaltgruppensystems 1 entspricht, liegt darin, dass ein symmetrischer und zudem modularer Aufbau der Umrichterschaltung erreicht werden kann, so dass die Umrichterschaltung einfach und schnell adaptierbar ist und somit an verschiedenste Schaltungsanforderungen angepasst werden kann. Weiterhin kann durch die in Fig. 3 und Fig. 5 gezeigte Vielzahl an Zwischenschaltgruppen 7 für jedes Schaltgruppensystem 1, 10.1,...10.n die zu übertragende Leistung durch eine höhere über dem jeweiligen n-ten Schaltgruppensysteme 10.n anliegende Gleichspannung erhöht werden, da sich diese Gleichspannung in einzelne Gleichspannungen entsprechend dem Kondensator 3 der zugehörigen ersten Hauptschaltgruppe 4 sowie an den Kondensatoren 6 der Vielzahl an Zwischenschaltgruppen 7 aufteilt. Darüber hinaus wird durch die Vielzahl eine Erhöhung der Anzahl an Schaltniveaus erzielt, wodurch sehr vorteilhaft eine weitere Reduzierung von Oberschwingungen auf der Phasenseite der Umrichterschaltung erreicht werden kann.

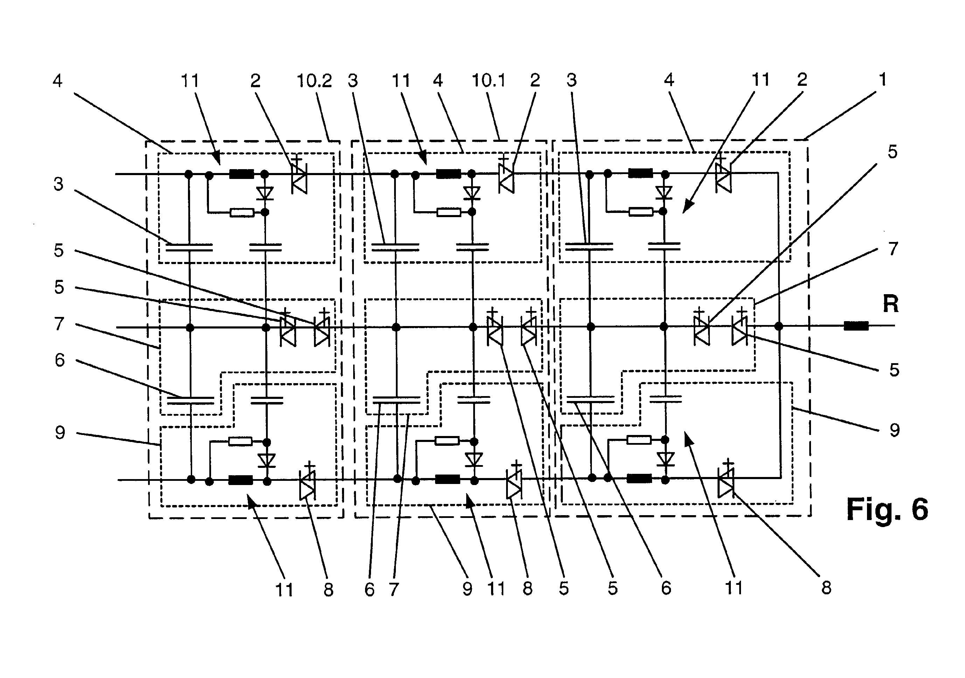

Die dritte Ausführungsform der erfindungsgemässen Umrichterschaltung ist gemäss Fig. 3 ist allgemein gültig. Für den Fachmann ist es denkbar, dass die Schaltgruppensysteme 1, 10.1,...10.n der dritten Ausführungsform der erfindungsgemässen Umrichterschaltung nach Fig. 3 gemäss den Schaltgruppensysteme 1, 10.1,...10.n der nachfolgend detailliert beschriebene Ausführungsformen der Umrichterschaltung nach Fig. 6 bis Fig. 9 ausgebildet sein können.

In Fig. 6 ist eine sechste, insbesondere einphasige, Ausführungsform der erfindungsgemässen Umrichterschaltung gezeigt. Darin ist die Anzahl der weiteren n Schaltgruppensysteme 10.1,...10.n beispielhaft n=2. Desweiteren sind die ansteuerbaren Leistungshalbleiterschalter 5 der Zwischenschaltgruppen 7 als Abschaltthyristoren ausgeführt, wobei die Abschaltthyristoren als vorstehend bereits beschriebene integrierte über die jeweils zugehörige Ansteuerelektrode kommutierte Thyristoren oder als Abschaltthyristoren mit seriegeschalteten MOSFET-Transistoren in Kascodeschaltung ausgebildet sind. Alternativ zu den als Abschaltthyristoren ausgeführten ansteuerbaren Leistungshalbleiterschalter 5 der Zwischenschaltgruppe 7 können diese auch als Bipolartransistoren mit isoliert angeordneten Ansteuerelektroden und antiparallel geschalteter Diode ausgebildet sein. Gemäss Fig. 6 ist bei jedem Schaltgruppensystem 1, 10.1,...10.n zwischen dem ansteuerbaren Leistungshalbleiterschalter 2 der ersten Hauptschaltgruppe 4 und dem Kondensator 3 der ersten Hauptschaltgruppe 4 ein Entlastungsnetzwerk 11 eingeschaltet. Zusätzlich ist zwischen dem ansteuerbaren Leistungshalbleiterschalter 8 der zweiten Hauptschaltgruppe 9 und dem Kondensator 3 der ersten Hauptschaltgruppe 4 ein Entlastungsnetzwerk 11 eingeschaltet. Das jeweilige Entlastungsnetzwerk 11 umfasst gemäss Fig. 6 eine Diode, einen Widerstand, eine Induktivität und eine Kapazität, wobei die vorstehend genannten Komponenten des Entlastungsnetzwerkes 11 gemäss Fig. 6 miteinander verschaltet sind. Das jeweilige Entlastungsnetzwerk 11 bewirkt, dass der Stromgradient di/dt beim Abschalten der Dioden, insbesondere der Abschaltthyristoren, der ersten beziehungsweise der zweiten Hauptschaltgruppe 4, 9 sowie auch der Zwischenschaltgruppe 7 begrenzt wird und somit vorteilhaft die jeweilige Diode vor einer Beschädigung oder gar Zerstörung geschützt wird. Darüber hinaus können thermische Verluste reduziert werden. Darüber hinaus wird im Falle eines Fehler in der Umrichterschaltung, beispielsweise bei einem Kurzschluss in einem der Schaltgruppensysteme 1, 10.1,...10.2 der dann resultierende Fehlerstrom durch die Induktivitäten der Entlastungsnetzwerke 11 vorteilhaft begrenzt und die Leistungshalbleiterschalter 2, 5, 8 und die Kondensatoren 3, 6 des entsprechenden Schaltgruppensystems 1, 10.1,...10.n somit vor Beschädigung oder Zerstörung geschützt. Es versteht sich, dass für eine mehrphasige Umrichterschaltung allgemein jedes Schaltgruppensystem 1, 10.1,...10.n nach Fig. 3 gemäss den vorstehend anhand von Fig. 6 beschriebenen Schaltgruppensystemen 1, 10.1,...10.n mit den Entlastungsnetzwerken 11 ausgeführt sein.

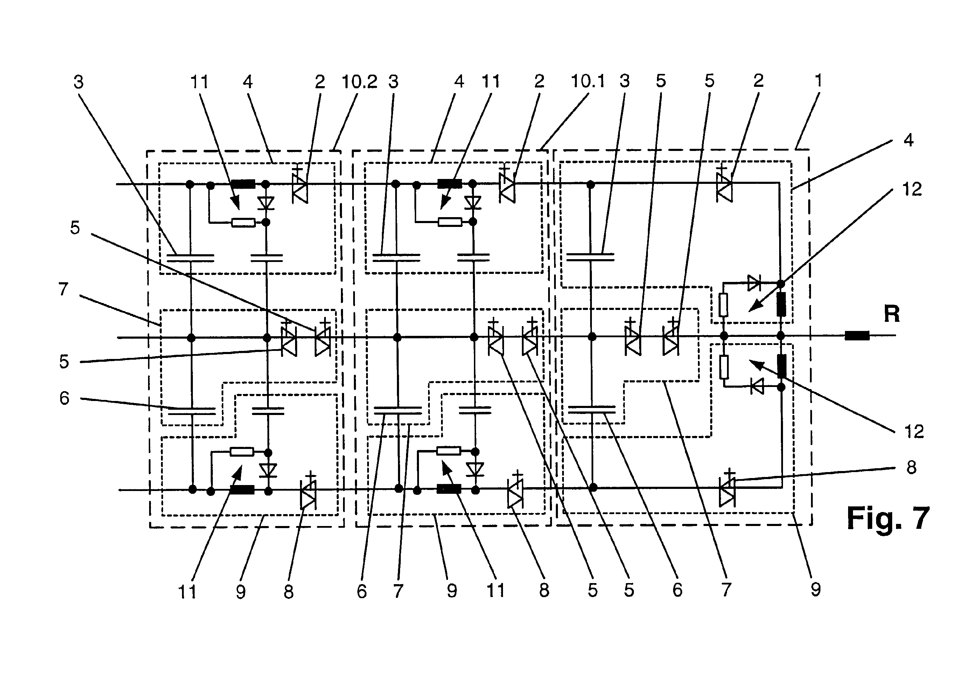

Eine siebte, insbesondere einphasige, Ausführungsform der erfindungsgemässen Umrichterschaltung nach Fig. 7 unterscheidet sich von der sechsten und vorstehend beschriebenen Ausführungsform gemäss Fig. 6 dadurch, dass nun beim ersten Schaltgruppensystem 1 ein Entlastungsnetzwerk 12 mit dem ansteuerbaren Leistungshalbleiterschalter 2 der ersten Hauptschaltgruppe 4 verbunden ist und zusätzlich beim ersten Schaltgruppensystem 1 ein Entlastungsnetzwerk 12 mit dem ansteuerbaren Leistungshalbleiterschalter 8 der zweiten Hauptschaltgruppe 9 verbunden ist. Weiterhin ist gemäss Fig. 7 bei den n weiteren Schaltgruppensystemen 10.1,...10.n jeweils zwischen dem ansteuerbaren Leistungshalbleiterschalter 2 der ersten Hauptschaltgruppe 4 und dem Kondensator 3 der ersten Hauptschaltgruppe 4 ein Entlastungsnetzwerk 11 eingeschaltet. Ferner ist nach Fig. 7 bei den n weiteren Schaltgruppensystemen 10.1,...10.n jeweils zwischen dem ansteuerbaren Leistungshalbleiterschalter 8 der zweiten Hauptschaltgruppe 9 und dem Kondensator 3 der ersten Hauptschaltgruppe 4 ein Entlastungsnetzwerk 11 eingeschaltet. Das jeweilige Entlastungsnetzwerk 11 umfasst gemäss Fig. 7 eine Diode, einen Widerstand, eine Induktivität und eine Kapazität, wobei die vorstehend genannten Komponenten des Entlastungsnetzwerkes 11 gemäss Fig. 7 miteinander verschaltet sind. Zudem umfasst das jeweilige Entlastungsnetzwerk 12 gemäss Fig. 7 eine Diode, einen Widerstand und eine Induktivität, wobei die vorstehend genannten Komponenten des Entlastungsnetzwerkes 12 gemäss Fig. 7 miteinander verbunden sind. Das jeweilige Entlastungsnetzwerk 11 und das Entlastungsnetzwerk 12 bewirkt ähnlich wie bei der sechsten Ausführungsform der Umrichterschaltung gemäss Fig. 6, dass der Stromgradient di/dt beim Abschalten der Dioden, insbesondere der Abschaltthyristoren, der ersten beziehungsweise der zweiten Hauptschaltgruppe 4, 9 sowie auch der Zwischenschaltgruppe 7 begrenzt wird und somit vorteilhaft die jeweilige Diode vor einer Beschädigung oder gar Zerstörung geschützt wird. Darüber hinaus können ebenfalls die thermischen Verluste reduziert werden. Desweiteren können die Induktivitäten der beiden Entlastungsnetzwerke 12 des ersten Schaltgruppensystems 1 vorteilhaft zu einer Induktivität mit einem Phasenabgriff gemäss Fig. 7 zusammengefasst werden, wodurch die Ausführungsform gemäss Fig. 7 der erfindungsgemässen Umrichterschaltung bezüglich Baugrösse verringert werden kann und sich der Schaltungsaufwand insgesamt verkleinert. Darüber hinaus wird, wie schon bei der Ausführungsform gemäss Fig. 6 erläutert, im Falle eines Fehler in der Umrichterschaltung, beispielsweise bei einem Kurzschluss in einem der Schaltgruppensysteme 1,10.1,...10.2 der dann resultierende Fehlerstrom durch die Induktivitäten des jeweiligen Entlastungsnetzwerks 11 und des Entlastungsnetzwerks 12 vorteilhaft begrenzt und die Leistungshalbleiterschalter 2, 5, 8 und die Kondensatoren 3, 6 des entsprechenden Schaltgruppensystems 1, 10.1,...10.n somit vor Beschädigung oder Zerstörung geschützt.

Wie in Fig. 7 gezeigt, sind die ansteuerbaren Leistungshalbleiterschalter 5 der Zwischenschaltgruppen 7 als Abschaltthyristoren ausgeführt, wobei die Abschaltthyristoren als vorstehend bereits beschriebene integrierte über die jeweils zugehörige Ansteuerelektrode kommutierte Thyristoren oder als Abschaltthyristoren mit seriegeschalteten MOSFET-Transistoren in Kascodeschaltung ausgebildet sind. Alternativ zu den als Abschaltthyristoren ausgeführten ansteuerbaren Leistungshalbleiterschalter 5 der Zwischenschaltgruppe 7 können diese auch als Bipolartransistoren mit isoliert angeordneten Ansteuerelektroden und antiparallel geschalteter Diode ausgebildet sein. Es versteht sich, dass für eine mehrphasige Umrichterschaltung allgemein jedes erste Schaltgruppensystem 1 nach Fig. 3 gemäss dem vorstehend anhand von Fig. 7 beschriebenen ersten Schaltgruppensystem 1 mit dem Entlastungsnetzwerken 12 ausgeführt sein kann, und dass die n weiteren Schaltgruppensysteme 10.1,...10.n nach Fig. 3 gemäss den vorstehend anhand von Fig. 6 beschriebenen zwei weiteren Schaltgruppensystemen 10.1, 10.2 mit den Entlastungsnetzwerken 11 ausgeführt sein können.

Falls eine Zwischenschaltgruppe 7 für jedes Schaltgruppensystem 1,10.1,...10.n vorgesehen ist, wie dies gemäss Fig. 6 und Fig. 7 für n=2 dargestellt ist, dann ist das jeweilige Entlastungsnetzwerk 11, 12 der ersten Hauptschaltgruppe 4 und das jeweilige Entlastungsnetzwerk 11, 12 der zweiten Hauptschaltgruppe 9 mit der Zwischenschaltgruppe 7 des zugehörigen Schaltsystems 1,10.1,...10.n verbunden. Falls mehrere Zwischenschaltgruppen 7 für jedes Schaltgruppensystem 1,10.1,...10.n vorgesehen sind, wie dies beispielsweise in Fig. 3 gezeigt ist, dann ist das entsprechende Entlastungsnetzwerk 11, 12 der ersten Hauptschaltgruppe 4 und das entsprechende Entlastungsnetzwerk 11, 12 der zweiten Hauptschaltgruppe 9 jeweils mit einer Zwischenschaltgruppe 7 des zugehörigen Schaltsystems 1, 10.1,....10.n verbunden. Es versteht sich, dass für eine mehrphasige Umrichterschaltung allgemein jedes Schaltgruppensystem 1, 10.1,...10.n nach Fig. 3 gemäss den vorstehend anhand von Fig. 7 beschriebenen Schaltgruppensystemen 1, 10.1,...10.n mit den Entlastungsnetzwerken 11, 12 ausgeführt sein können.

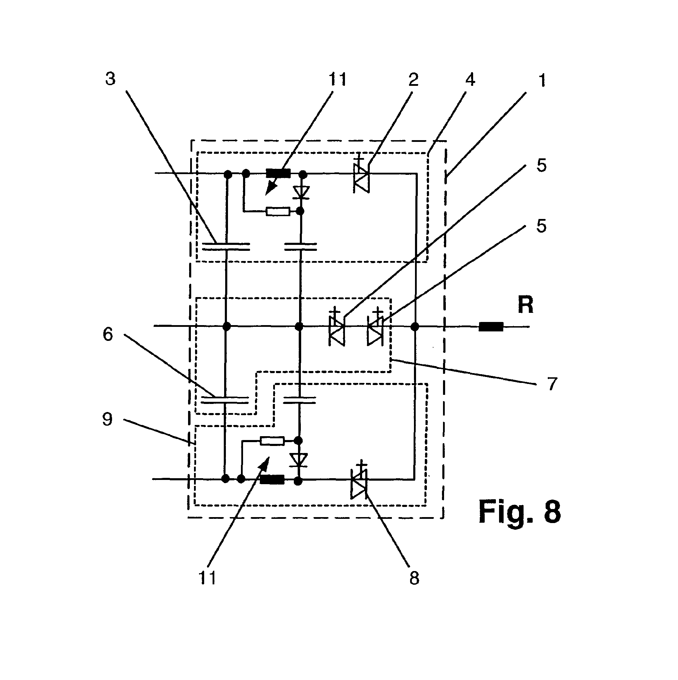

In Fig. 8 ist eine achte, insbesondere einphasige, Ausführungsform der erfindungsgemässen Umrichterschaltung dargestellt. Die darin gezeigte Umrichterschaltung weist keine n weiteren Schaltgruppensysteme 10.,...10.n auf und basiert somit auf der ersten Ausführungsform der Umrichterschaltung nach Fig. 1. Wie in Fig. 8 gezeigt, sind die ansteuerbaren Leistungshalbleiterschalter 5 der Zwischenschaltgruppe 7 als Abschaltthyristoren ausgeführt, wobei die Abschaltthyristoren als vorstehend bereits beschriebene integrierte über die jeweils zugehörige Ansteuerelektrode kommutierte Thyristoren oder als Abschaltthyristoren mit seriegeschalteten MOSFET-Transistoren in Kascodeschaltung ausgebildet sind. Alternativ zu den als Abschaltthyristoren ausgeführten ansteuerbaren Leistungshalbleiterschalter 5 der Zwischenschaltgruppe 7 können diese auch als Bipolartransistoren mit isoliert angeordneten Ansteuerelektroden und antiparallel geschalteter Diode ausgebildet sein. Beim ersten Schaltgruppensystem 1 ist nach Fig. 8 zwischen dem ansteuerbaren Leistungshalbleiterschalter 2 der ersten Hauptschaltgruppe 4 und dem Kondensator 3 der ersten Hauptschaltgruppe 4 ein Entlastungsnetzwerk 11 eingeschaltet ist. Weiterhin ist zwischen dem ansteuerbaren Leistungshalbleiterschalter 8 der zweiten Hauptschaltgruppe 9 und dem Kondensator 3 der ersten Hauptschaltgruppe 4 ebenfalls ein Entlastungsnetzwerk 11 eingeschaltet. Der Aufbau des Entlastungsnetzwerkes 11 entspricht dem bereits bei der vorstehenden Beschreibung der Ausführungsformen der Umrichterschaltung gemäss Fig. 6 und Fig. 7 detailliert erläuterten Entlastungsnetzwerk 11 mit den dabei angegebenen Vorteilen. Falls eine Zwischenschaltgruppe 7 für das erste Schaltgruppensystem 1 vorgesehen ist, wie dies gemäss Fig. 8 der Fall ist, dann ist das Entlastungsnetzwerk 11 der ersten Hauptschaltgruppe 4 und das Entlastungsnetzwerk 11 der zweiten Hauptschaltgruppe 9 mit der Zwischenschaltgruppe 7 verbunden. Für den Fall, dass mehrere Zwischenschaltgruppen 7 für das erste Schaltgruppensystem 1 vorgesehen sind, ist das Entlastungsnetzwerk 11 der ersten Hauptschaltgruppe 4 und das Entlastungsnetzwerk 11 der zweiten Hauptschaltgruppe 9 jeweils mit einer Zwischenschaltgruppe 7 verbunden. Es versteht sich, dass für eine mehrphasige Umrichterschaltung gemäss der dritten Ausführungsform nach Fig. 3 mit jeweils nur einem ersten Schaltgruppensystem 1 für jede Phase und keinen weiteren n Schaltgruppensystemen 10.1,...10.n die ersten Schaltgruppensysteme 1 gemäss dem vorstehend anhand von Fig. 8 beschriebenen ersten Schaltgruppensystem 1 mit dem Entlastungsnetzwerk 11 ausgeführt sein können.

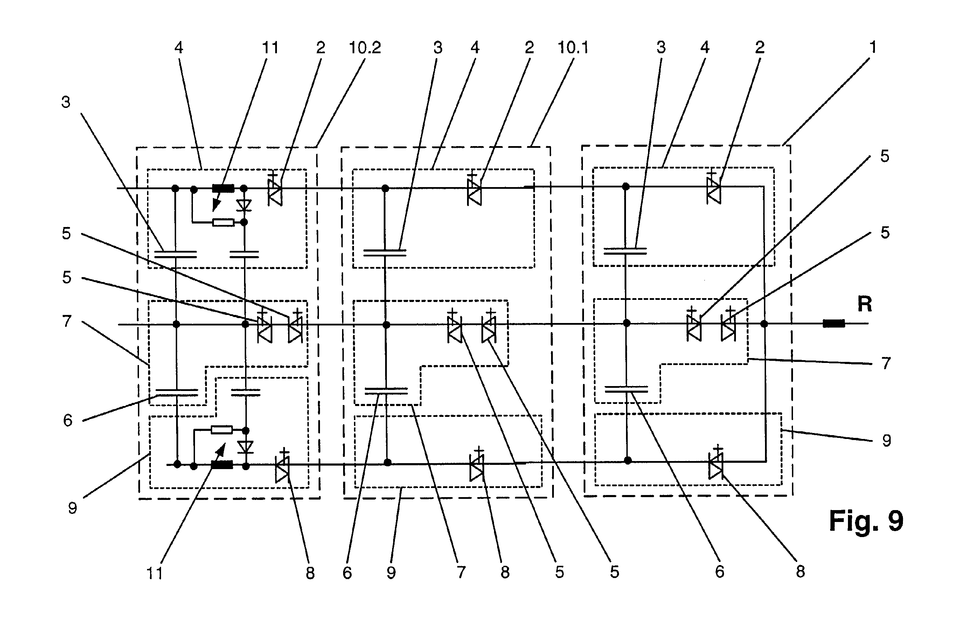

In Fig. 9 ist eine neunte Ausführungsform der erfindungsgemässen Umrichterschaltung gezeigt, wobei die Anzahl der n weiteren Schaltgruppensysteme 10.1,...10.n beispielhaft n=2 ist. Wie in Fig. 9 gezeigt, sind die ansteuerbaren Leistungshalbleiterschalter 5 der Zwischenschaltgruppen 7 als Abschaltthyristoren ausgeführt, wobei die Abschaltthyristoren als vorstehend bereits beschriebene integrierte über die jeweils zugehörige Ansteuerelektrode kommutierte Thyristoren oder als Abschaltthyristoren mit seriegeschalteten MOSFET-Transistoren in Kascodeschaltung ausgebildet sind. Es hat sich als besonders vorteilhaft erwiesen, wenn die Abschaltthyristoren weich eingeschaltet werden, wodurch eine kleiner Stromgradient di/dt erreicht werden kann, der die Abschaltthyristoren beim Einschalten, aber auch die entsprechenden Dioden beim Ausschalten dann insgesamt weniger stark belastet. Alternativ zu den als Abschaltthyristoren ausgeführten ansteuerbaren Leistungshalbleiterschalter 5 der Zwischenschaltgruppe 7 können diese auch als Bipolartransistoren mit isoliert angeordneten Ansteuerelektroden und antiparallel geschalteter Diode ausgebildet sein. Beim zweiten weiteren Schaltgruppensystem 10.2 gemäss Fig. 9 beziehungsweise allgemein beim n-ten weiteren Schaltgruppensystem 10.n ist zwischen dem ansteuerbaren Leistungshalbleiterschalter 2 der ersten Hauptschaltgruppe 4 und dem Kondensator 3 der ersten Hauptschaltgruppe 4 ein Entlastungsnetzwerk 11 eingeschaltet. Ferner ist zwischen dem ansteuerbaren Leistungshalbleiterschalter 8 der zweiten Hauptschaltgruppe 9 des n-ten weiteren Schaltgruppensystems 10.n und dem Kondensator 3 der ersten Hauptschaltgruppe 4 des n-ten weiteren Schaltgruppensystems 10.n ein Entlastungsnetzwerk 11 eingeschaltet. Der Aufbau des Entlastungsnetzwerkes 11 entspricht dem bereits bei der vorstehenden Beschreibung der Ausführungsformen der Umrichterschaltung gemäss Fig. 6 und Fig. 7 detailliert erläuterten Entlastungsnetzwerk 11 mit den dabei angegebenen Vorteilen. Das erste Schaltgruppensystem 1 und das erste weitere Schaltgruppensystem 10.1 weisen gemäss Fig. 9 kein Entlastungsnetzwerk 11 auf, wobei somit allgemein nur das n-te weitere Schaltgruppensystems 10.n die vorstehend beschriebenen Entlastungsnetzwerke 11 aufweist. Falls eine Zwischenschaltgruppe 7 für das n-te weitere Schaltgruppensystem 10.n vorgesehen ist, dann ist das Entlastungsnetzwerk 7 der ersten Hauptschaltgruppe 4 und das Entlastungsnetzwerk 11 der zweiten Hauptschaltgruppe 9 mit der Zwischenschaltgruppe 7 verbunden. Für den Fall, dass mehrere Zwischenschaltgruppen 7 für das n-ten weitere Schaltgruppensystem 10.n vorgesehen sind, ist das Entlastungsnetzwerk 11 der ersten Hauptschaltgruppe 4 und das Entlastungsnetzwerk 11 der zweiten Hauptschaltgruppe 9 jeweils mit einer Zwischenschaltgruppe 7 verbunden. Es versteht sich, dass für eine mehrphasige Umrichterschaltung gemäss der dritten Ausführungsform nach Fig. 3 die n-ten Schaltgruppensysteme 10.n für jede Phase gemäss dem vorstehend anhand von Fig. 9 beschriebenen n-ten Schaltgruppensystem 10.n mit dem Entlastungsnetzwerk 11 ausgeführt sein können und weiterhin die restlichen Schaltgruppensysteme 1, 10.1,...10.n-1 gemäss dem vorstehend anhand von Fig. 9 beschriebenen ersten Schaltgruppensystem 1 ausgeführt sein können.

Bereits erläutert wurde, dass die ansteuerbaren Leistungshalbleiterschalter 5 der Zwischenschaltgruppe 7 gemäss den Ausführungsformen der Umrichterschaltung nach Fig. 1, Fig. 4 und Fig. 5 als Bipolartransistoren mit isoliert angeordneten Ansteuerelektroden und antiparallel geschalteter Diode ausgebildet sind beziehungsweise alternativ zu den als Abschaltthyristoren ausgeführten ansteuerbaren Leistungshalbleiterschalter 5 der Zwischenschaltgruppe 7 gemäss den Ausführungsformen der Umrichterschaltung nach Fig. 6, Fig. 7, Fig. 8 und Fig. 9 als Bipolartransistoren mit isoliert angeordneten Ansteuerelektroden und antiparallel geschalteter Diode ausgebildet sein können. Mittels dieser Bipolartransistoren ist es vorteilhaft möglich, durch entsprechende Ansteuerung der Bipolartransistoren, d.h. beim Einschalten der Bipolartransistoren, den Stromgradient di/dt der antiparallelen Dioden der Abschaltthyristoren der ersten beziehungsweise der zweiten Hauptschaltgruppe 4, 9 kontrolliert zu begrenzen und somit vorteilhaft die jeweilige Diode vor einer Beschädigung oder gar Zerstörung zu schützen. Ferner ist es durch die Abschaltthyristoren der ersten beziehungsweise der zweiten Hauptschaltgruppe 4, 9 vorteilhaft möglich, durch entsprechende Ansteuerung des jeweiligen Abschaltthyristors, d.h. bei weichem Einschalten des jeweiligen Thyristors, den Stromgradient di/dt der antiparallelen Dioden der Bipolartransistoren mit isoliert angeordneten Ansteuerelektroden der Zwischenschaltgruppe 7 kontrolliert zu begrenzen und somit vorteilhaft die jeweilige Diode vor einer Beschädigung oder gar Zerstörung zu schützen. Darüber hinaus können die thermischen Verluste vorteilhaft weiter reduziert werden.

Insgesamt stellt die erfindungsgemässe Umrichterschaltung eine durch wenig Bauelemente gekennzeichnete und damit unkomplizierte, robuste und wenig störungsanfällige Lösung dar, wobei gleichzeitig eine Übertragung grosser Leistungen möglich ist

### Bezugszeichenliste

- 1: erstes Schaltgruppensystem
- 2: ansteuerbarer Leistungshalbleiterschalter der ersten Hauptschaltgruppe
- 3: Kondensator der ersten Hauptschaltgruppe
- 4: erste Hauptschaltgruppe
- 5: ansteuerbarer Leistungshalbleiterschalter der Zwischenschaltgruppe
- 6: Kondensator der Zwischenschaltgruppe
- 7: Zwischenschaltgruppe
- 8: ansteuerbare Leistungshalbleiterschalter der zweiten Hauptschaltgruppe
- 9: zweite Hauptschaltgruppe
- 10.1,...10.n: weitere Schaltgruppensysteme
- 11,12: Entlastungsnetzwerk

## Patentansprüche

1. Umrichterschaltung für mindestens eine Phase (R, S, T), mit einem für jede Phase (R, S, T) vorgesehenen ersten Schaltgruppensystem (1),
welches eine durch einen ansteuerbaren Leistungshalbleiterschalter (2) und durch einen mit dem ansteuerbaren Leistungshalbleiterschalter (2) verbundenen Kondensator (3) gebildete erste Hauptschaltgruppe (4) aufweist,
welches mindestens eine durch zwei in Serie geschaltete ansteuerbare Leistungshalbleiterschalter (5) und durch einen mit einem der Leistungshalbleiterschalter (5) verbundenen Kondensator (6) gebildete Zwischenschaltgruppe (7) aufweist, wobei die Zwischenschaltgruppe (7) parallel zur ersten Hauptschaltgruppe (4) geschaltet ist,
und welches eine durch einen ansteuerbaren Leistungshalbleiterschalter (8) gebildete zweite Hauptschaltgruppe (9) aufweist, wobei die zweite Hauptschaltgruppe (9) parallel zur mindestens einen Zwischenschaltgruppe (7) und zur ersten Hauptschaltgruppe (4) geschaltet ist,
**dadurch gekennzeichnet,**
**dass** der ansteuerbare Leistungshalbleiterschalter (2) der ersten Hauptschaltgruppe (4) als Abschaltthyristor ausgebildet ist, und
**dass** der ansteuerbare Leistungshalbleiterschalter (8) der zweiten Hauptschaltgruppe (9) als Abschaltthyristor ausgebildet ist.

2. Umrichterschaltung nach Anspruch 1, **dadurch gekennzeichnet, dass** der Abschaltthyristor ein integrierter über die zugehörige Ansteuerelektrode kommutierter Thyristor oder ein Abschaltthyristor mit seriegeschalteten MOSFET-Transistoren in Kascodeschaltung ist.

3. Umrichterschaltung nach einem der Ansprüche 1 oder 2, **dadurch gekennzeichnet, dass** die ansteuerbaren Leistungshalbleiterschalter (5) der Zwischenschaltgruppe (7) als Abschaltthyristoren ausgebildet sind.

4. Umrichterschaltung nach Anspruch 3, **dadurch gekennzeichnet, dass** die Abschaltthyristoren integrierte über die zugehörigen Ansteuerelektroden kommutierte Thyristoren oder Abschaltthyristoren mit seriegeschalteten MOSFET-Transistoren in Kascodeschaltung sind.

5. Umrichterschaltung nach einem der Ansprüche 1 bis 4, **dadurch gekennzeichnet, dass** bei mehreren Phasen (R, S, T) die ersten Schaltgruppensysteme (1) der Phasen (R, S, T) parallel miteinander verbunden sind.

6. Umrichterschaltung nach einem der Ansprüche 1 bis 4, **dadurch gekennzeichnet, dass** für jede Phase (R, S, T) n weitere Schaltgruppensysteme (10.1,...10.n) vorgesehen sind, wobei n ≥ 1 ist,
dass die erste Hauptschaltgruppe (4) des ersten Schaltgruppensystems (1) und die ersten Hauptschaltgruppen (4) der n weiteren Schaltgruppensysteme (10.1,...10.n) zueinander in Serie geschaltet sind, und
dass die zweite Hauptschaltgruppe (9) des ersten Schaltgruppensystems (1) und die zweiten Hauptschaltgruppen (9) der n weiteren Schaltgruppensysteme (10.1,...10.n) zueinander in Serie geschaltet sind.

7. Umrichterschaltung nach Anspruch 6, **dadurch gekennzeichnet, dass** bei mehreren Phasen (R, S, T) die n-ten weiteren Schaltgruppensysteme (10.n) der Phasen (R, S, T) parallel miteinander verbunden sind.

8. Umrichterschaltung nach Anspruch 6 oder 7, **dadurch gekennzeichnet, dass** die Anzahl der Zwischenschaltgruppen (7) eines jeden Schaltgruppensystems (10.1,...10.n) der n weiteren Schaltgruppensysteme (10.1,...10.n) der Anzahl der Zwischenschaltgruppen (7) des ersten Schaltgruppensystems (1) entspricht.

9. Umrichterschaltung nach Anspruch 8, **dadurch gekennzeichnet, dass** jede Zwischenschaltgruppe (7) des ersten weiteren Schaltgruppensystems (10.1) seriell mit jeweils einer Zwischenschaltgruppe (7) des ersten Schaltgruppensystems (1) verbunden ist.

10. Umrichterschaltung nach Anspruch 9, **dadurch gekennzeichnet, dass** für n ≥ 2 jede Zwischenschaltgruppe (7) des n-ten weiteren Schaltgruppensystems (10.2,...10.n) seriell mit jeweils einer Zwischenschaltgruppe (7) des (n-1)-ten Schaltgruppensystems (10.2,...10.n) verbunden ist.

11. Umrichterschaltung nach einem der Ansprüche 6 bis 10, **dadurch gekennzeichnet, dass** bei jedem Schaltgruppensystem (1, 10.1,...10.n) zwischen dem ansteuerbaren Leistungshalbleiterschalter (2) der ersten Hauptschaltgruppe (4) und dem Kondensator (3) der ersten Hauptschaltgruppe (4) ein Entlastungsnetzwerk (11) eingeschaltet ist, und dass zwischen dem ansteuerbaren Leistungshalbleiterschalter (8) der zweiten Hauptschaltgruppe (9) und dem Kondensator (3) der ersten Hauptschaltgruppe (4) ein Entlastungsnetzwerk (11) eingeschaltet ist.

12. Umrichterschaltung nach einem der Ansprüche 6 bis 10, **dadurch gekennzeichnet, dass** beim ersten Schaltgruppensystem (1) ein Entlastungsnetzwerk (12) mit dem ansteuerbaren Leistungshalbleiterschalter (2) der ersten Hauptschaltgruppe (4) verbunden ist,
dass beim ersten Schaltgruppensystem (1) ein Entlastungsnetzwerk (12) mit dem ansteuerbaren Leistungshalbleiterschalter (8) der zweiten Hauptschaltgruppe (9) verbunden ist,
dass bei den n weiteren Schaltgruppensystemen (10.1,...10.n) jeweils zwischen dem ansteuerbaren Leistungshalbleiterschalter (2) der ersten Hauptschaltgruppe (4) und dem Kondensator (3) der ersten Hauptschaltgruppe (4) ein Entlastungsnetzwerk (11) eingeschaltet ist, und
dass bei den n weiteren Schaltgruppensystemen (10.1,...10.n) jeweils zwischen dem ansteuerbaren Leistungshalbleiterschalter (8) der zweiten Hauptschaltgruppe (9) und dem Kondensator (3) der ersten Hauptschaltgruppe (4) ein Entlastungsnetzwerk (11) eingeschaltet ist.

13. Umrichterschaltung nach Anspruch 11 oder 12, **dadurch gekennzeichnet, dass**, falls eine Zwischenschaltgruppe (7) für jedes Schaltgruppensystem (1,10.1,...10.n) vorgesehen ist, das Entlastungsnetzwerk (11, 12) der ersten Hauptschaltgruppe (4) und das Entlastungsnetzwerk (11, 12) der zweiten Hauptschaltgruppe (9) mit der Zwischenschaltgruppe (7) des zugehörigen Schaltsystems (1, 10.1,...10.n) verbunden ist, und
dass, falls mehrere Zwischenschaltgruppen (7) für jedes Schaltgruppensystem (1,10.1,...10.n) vorgesehen sind, das Entlastungsnetzwerk (11, 12) der ersten Hauptschaltgruppe (4) und das Entlastungsnetzwerk (11, 12) der zweiten Hauptschaltgruppe (9) jeweils mit einer Zwischenschaltgruppe (7) des zugehörigen Schaltsystems (1, 10.1,...10.n) verbunden ist.

14. Umrichterschaltung nach einem der Ansprüche 1 bis 5, **dadurch gekennzeichnet, dass** beim ersten Schaltgruppensystem (1) zwischen dem ansteuerbaren Leistungshalbleiterschalter (2) der ersten Hauptschaltgruppe (4) und dem Kondensator (3) der erste Hauptschaltgruppe (4) ein Entlastungsnetzwerk (11) eingeschaltet ist, und
dass zwischen dem ansteuerbaren Leistungshalbleiterschalter (8) der zweiten Hauptschaltgruppe (9) und dem Kondensator (3) der ersten Hauptschaltgruppe (4) ein Entlastungsnetzwerk (11) eingeschaltet ist.

15. Umrichterschaltung nach Anspruch 14, **dadurch gekennzeichnet, dass**, falls eine Zwischenschaltgruppe (7) für das erste Schaltgruppensystem (1) vorgesehen ist, das Entlastungsnetzwerk (11) der ersten Hauptschaltgruppe (4) und das Entlastungsnetzwerk (11) der zweiten Hauptschaltgruppe (9) mit der Zwischenschaltgruppe (7) verbunden ist, und
dass, falls mehrere Zwischenschaltgruppen (7) für das erste Schaltgruppensystem (1) vorgesehen sind, das Entlastungsnetzwerk (11) der ersten Hauptschaltgruppe (4) und
das Entlastungsnetzwerk (11) der zweiten Hauptschaltgruppe (9) jeweils mit einer Zwischenschaltgruppe (7) verbunden ist.

16. Umrichterschaltung nach einem der Ansprüche 6 bis 10, **dadurch gekennzeichnet, dass** beim n-ten weiteren Schaltgruppensystem (10.n) zwischen dem ansteuerbaren Leistungshalbleiterschalter (2) der ersten Hauptschaltgruppe (4) und dem Kondensator (3) der erste Hauptschaltgruppe (4) ein Entlastungsnetzwerk (11) eingeschaltet ist, und
dass zwischen dem ansteuerbaren Leistungshalbleiterschalter (8) der zweiten Hauptschaltgruppe (9) und dem Kondensator (3) der ersten Hauptschaltgruppe (4) ein Entlastungsnetzwerk (11) eingeschaltet ist.

17. Umrichterschaltung nach Anspruch 16, **dadurch gekennzeichnet, dass**, falls eine Zwischenschaltgruppe (7) für das n-te weitere Schaltgruppensystem (10.n) vorgesehen ist, das Entlastungsnetzwerk (7) der ersten Hauptschaltgruppe (4) und das Entlastungsnetzwerk (11) der zweiten Hauptschaltgruppe (9) mit der Zwischenschaltgruppe (7) verbunden ist, und
dass, falls mehrere Zwischenschaltgruppen (7) für das n-te weitere Schaltgruppensystem (10.n) vorgesehen sind, das Entlastungsnetzwerk (11) der ersten Hauptschaltgruppe (4) und das Entlastungsnetzwerk (11) der zweiten Hauptschaltgruppe (9) jeweils mit einer Zwischenschaltgruppe (7) verbunden ist.
